# EUROPÄISCHE PATENTANMELDUNG

(11) **EP 1 095 569 A2**
(43) Veröffentlichungstag der Anmeldung: **02.05.2001**
(21) Anmeldenummer: 00118719.4
(22) Anmeldetag: 30.08.2000
(51) Int. Cl.: A22C 11/10

(54) **Verfahren und Vorrichtung zur Herstellung von kettenähnlichen Lebensmittelprodukten wie Würstchen oder dgl.**

(30) Priorität: 29.10.1999 DE 19952102
(71) Anmelder: VEMAG Maschinen- und Anlagenbau GmbH, 27283 Verden/Aller (DE)
(72) Erfinder: Krompholz, Harry, 27313 Dörverden/Stedorf (DE); Meier, Dieter, 27308 Kirchlinteln (DE)
(74) Vertreter: Eisenführ, Speiser & Partner

(57) **Zusammenfassung**

Die Erfindung betrifft ein Verfahren und eine Vorrichtung zur Herstellung von kettenähnlichen Lebensmittelprodukten wie Würstchen (46) oder dergleichen, bei dem ein pastöses Füllmaterial wie etwa Wurstbrät mittels einer Füllpumpe durch ein um seine Längsachse (7) rotierbares Füllrohr (8) hindurchgefördert und in eine schlauchartige, teilweise das Füllrohr (8) umgebenden Darm (10) oder eine Hülle eingefüllt wird, bei dem der gefüllte Darm (10) einer Portioniereinrichtung (4) mit mehreren paarweise gegenüberliegenden und synchron zusammen mit dem gefüllten Darm (10) bewegbaren Abteilelementen (42) zugeführt wird und der gefüllte Darm (10) von zwei paarweise gegenüberliegenden Abteilelementen (42) erfaßt und mit einer Klemmkraft beaufschlagt wird, und bei dem durch Rotation des Füllrohres (8) ein Drehmoment von dem Füllrohr (8) auf den Darm (10) aufgebracht wird, so daß der gefüllte Darm (10) wenigstens in einem Abschnitt (22) zwischen einer Austrittsöffnung des Füllrohres (8) und der Portioniereinrichtung (4) in Rotation versetzt wird und durch Aufbringung der Klemmkraft durch die Abteilungselemente (42) lokal an einer Rotation gehindert wird, so daß eine Abdrehstelle (44) erzeugt wird, und bei dem an einem von einer erzeugten Abdrehstelle (44) beabstandeten Ort an dem gefüllten Darm eine weitere Abdrehstelle (44) erzeugt wird, so daß portionierte Würstchen (46) oder dergleichen erzeugt werden. Erfindungsgemäß ist vorgesehen, daß das Füllmaterial wenigstens teilweise durch im Endbereich des Füllrohrs (8) in dessen Umfangswand ausgebildete Ausnehmungen (14) radial in den Darm (10) einströmt und der Durchmesser des Darms (10) im Endbereich des Füllrohres (8) aufgrund der wenigstens teilweise radialen Einströmung vergrößert wird.

## Beschreibung

Die Erfindung betrifft ein Verfahren zur Herstellung von kettenähnlichen Lebensmittelprodukten wie Würstchen oder dergleichen, bei dem ein pastöses Füllmaterial wie etwa Wurstbrät mittels einer Füllpumpe durch ein um seine Längsachse rotierbares Füllrohr hindurchgefördert und in eine schlauchartige, teilweise das Füllrohr umgebenden Darm oder eine Hülle eingefüllt wird, bei dem der gefüllte Darm einer Portioniereinrichtung mit mehreren paarweise gegenüberliegenden und synchron zusammen mit dem gefüllten Darm bewegbaren Abteilelementen zugeführt wird und der gefüllte Darm von zwei paarweise gegenüberliegenden Abteilelementen erfaßt und mit einer Klemm kraft beaufschlagt wird, und bei dem durch Rotation des Füllrohres ein Drehmoment von dem Füllrohr auf den Darm aufgebracht wird, so daß der gefüllte Darm wenigstens in einem Abschnitt zwischen einer Austrittsöffnung des Füllrohres und der Portioniereinrichtung in Rotation versetzt wird und durch Aufbringung der Klemmkraft durch die Abteilungselemente lokal an einer Rotation gehindert wird, so daß eine Abdrehstelle erzeugt wird, und bei dem an einem von einer erzeugten Abdrehstelle beabstandeten Ort an dem gefüllten Darm eine weitere Abdrehstelle erzeugt wird, so daß portionierte Würstchen oder dergleichen erzeugt werden.

Die Erfindung betrifft ferner eine Vorrichtung zur Herstellung von kettenähnlichen Lebensmittelprodukten wie Würstchen oder dergleichen, mit einer Füllpumpe zum Fördern eines pastösen Füllmaterials wie Wurstbrät, einem mit der Füllpumpe kommunizierenden, um seine Längsachse rotierbaren Füllrohr, welches an einem Endbereich eine Austrittsöffnung zum Abgeben des Füllmaterials in einen teilweise das Füllrohr umgebenden Darm oder eine Hülle aufweist und welches mit dem Darm derart in Eingriff steht, daß durch Rotation des Füllrohres ein Drehmoment von dem Füllrohr auf den Darm aufgebracht wird, so daß der gefüllte Darm wenigstens in einem Abschnitt zwischen einer Austrittsöffnung des Füllrohres und der Portioniereinrichtung in Rotation versetzt wird, und mit einer Portioniereinrichtung mit mehreren paarweise gegenüberliegenden und synchron bewegbaren Abteilelementen, die auf den gefüllten Darm eine Klemmkraft aufbringen, so daß eine definierte Abdrehstelle erzeugt werden kann.

Mit Hilfe eines derartigen Verfahrens bzw. einer Vorrichtung, die beispielsweise aus der deutschen Patentschrift DE 23 02 297 bekannt sind, können in erster Linie Würstchen, aber auch andere portionierte Lebensmittelprodukte hergestellt werden. Zur Herstellung längenportionierter Würstchen gemäß DE 23 02 297 wird Wurstbrät mittels einer Füllpumpe durch ein rotierbares Füllrohr gefördert und in einen Darm eingeführt. Der sich während des Einfüllens auf weitende Darm wird gleichzeitig von der Portioniereinrichtung mit einer Zugkraft beaufschlagt und von dem Füllrohr abgezogen. Die Abteilelemente der Portioniereinrichtung erfassen den gefüllten Darm und hindern ihn an einer Rotation, während gleichzeitig der gefüllte Darm mittels eines von dem Füllrohr aufgebrachten Drehmoments kontinuierlich rotiert wird, so daß eine Abdrehstelle im Bereich der den gefüllten Darm erfassenden Abteilelemente erzeugt wird. Zu einem späteren Zeitpunkt wird nach Weiterförderung des gefüllten Darms eine weitere beabstandete Abdrehstelle mit Hilfe der Abteilelementen der Portioniereinrichtung erzeugt, so daß ein längenportioniertes Würstchen hergestellt wird. Die zusammenhängenden Würstchen können anschließend einer Aufhängevorrichtung übergeben und können beispielsweise einer Räucherung unterzogen werden.

Zur Aufbringung eines Drehmoments zur Rotation des gefüllten Darms ist bei der bekannten Vorrichtung eine sogenannte Bremseinrichtung mit Bremsrollen vorgesehen, die für eine Anpressung des ungefüllten Darms an die äußere Oberfläche des Füllrohrs sorgen. Die Bremsrollen umschließen das Füllrohr ringförmig. Die Anpreßkraft der Bremsrollen muß gezielt gewählt werden, so daß der Darm einerseits nicht reißt, andererseits aber ein gewisser Widerstand entgegengesetzt wird. Die Vorrichtung weist den Nachteil auf, daß die Einstellung der Anpreßkraft der Bremsrollen und die Aufbringung eines ausreichenden Drehmoments schwierig ist. Bei Aufbringen eines zu großen Drehmoments und/oder zu großer Anpreßkraft durch die Bremsrollen kann der Darm reißen.

Ein weiterer Nachteil der bekannten Vorrichtung besteht darin, daß die Bremseinrichtung mit den Bremsrollen recht aufwendig konstruiert ist. Darüber hinaus ist das Aufziehen des ungefüllten Darms zur Vorbereitung der eigentlichen Befüllung mit Wurstbrät sehr aufwendig. Da der geraffte Darm nicht durch die ringförmig geschlossene Bremseinrichtung hindurchgefädelt werden kann, muß die gesamte Bremseinrichtung entweder komplett axial von dem Füllrohr abgeschoben oder abgeschwenkt werden, was im Betrieb aber auch konstruktiv aufwendig ist. Besonders störend hierbei ist, daß das Ende des Füllrohrs relativ dicht an der Portioniereinrichtung angeordnet ist und somit wenig Platz für ein Abschwenken und auch für ein manuelles Einfädeln des Darms und Aufziehen auf das Füllrohr zur Verfügung steht. Gegebenenfalls müßte die gesamte Portioniereinrichtung ebenfalls fortbewegt werden. Darüber hinaus ist es im Falle eines sogenannten Darmplatzers recht aufwendig, die einzelnen Komponenten Füllrohr, Bremseinrichtung und Portioniereinrichtung so zu plazieren, daß diese Komponenten gut zugänglich sind und rasch gereinigt werden können.

Ein besonderes Ziel bei der Herstellung von Würstchen ist es, daß die einzelnen Würstchen möglichst gleiche Längen und Volumen aufweisen, und zwar auch dann, wenn die eingesetzten Därme Durchmesserschwankungen unterliegen. Bei Naturdärmen treten derartige Durchmesser- oder Kaliberschwankungen besonders häufig auf. Mit Hilfe der Füllmaschine und der Portioniereinrichtung wird versucht, in jedes Würstchen etwa das gleiche Volumen an Füllmaterial einzufüllen. Aufgrund der Kaliberschwankungen können dabei unterschiedlich lange Würstchen entstehen, wenn das Kaliber innerhalb einer Kalibergruppe mal nach oben oder unten abweicht, so daß entweder eine kürzeres oder ein längeres Würstchen entsteht. Dies wird von den Verarbeitern und den Konsumenten nicht gern gesehen.

Aufgabe der vorliegenden Erfindung ist es, ein Verfahren sowie eine Vorrichtung zur Herstellung von Würstchen oder anderen kettenähnlichen Lebensmittelprodukten bereitzustellen, die eine zuverlässige, portionierte Herstellung ermöglichen, einfach handhabbar ist, insbesondere ein einfaches Auffädeln des Darms ermöglichen und einfach zu reinigen ist. Ferner sollen unterschiedliche Därme wie Naturdärme oder Kunstdärme eingesetzt werden können und weitgehend sichergestellt werden, daß gleichlange Würstchen auch bei Auftreten von Kaliberschwankungen der Därme hergestellt werden können.

Die Erfindung löst diese Aufgabe gemäß einem ersten Aspekt bei einem Verfahren der eingangs genannten Art dadurch, daß das Füllmaterial wenigstens teilweise durch im Endbereich des Füllrohrs in dessen Umfangswand ausgebildete Ausnehmungen radial in den Darm einströmt und der Durchmesser des Darms im Endbereich des Füllrohres aufgrund der wenigstens teilweise radialen Einströmung vergrößert wird.

Die Aufgabe wird ferner bei einer Vorrichtung der eingangs genannten Art dadurch gelöst, daß das Füllrohr in seinem Endbereich in der Umfangswand mindestens eine Ausnehmung aufweist, durch die Füllmaterial radial in den Darm einströmt und eine Vergrößerung des Durchmessers des Darms im Endbereich des Füllrohrs verursacht.

Die Vorteile der Erfindung bestehen im wesentlichen darin, daß durch die wenigstens teilweise radiale Ausströmung des Füllmaterials aus dem Füllrohr verstärkt ein Drehmoment von dem austretenden Füllmaterial auf den Darm aufgebracht wird, so daß der Darm in Rotation versetzt wird. Aufgrund der Gestaltung des Füllrohres mit Ausnehmungen im Endbereich wird insbesondere von den die Ausnehmungen begrenzenden Füllrohrwandabschnitten zusätzlich ein Drehmoment auf das durch die Ausnehmungen ausströmende Füllmaterial aufgebracht und somit das Füllmaterial stärker in Rotation versetzt als bei herkömmlichen Füllrohren. Aufgrund der erfindungsgemäßen, gegebenenfalls flügelförmigen Öffnungsstruktur des Füllrohres wird das austretende Füllmaterial zuzätzlich rotiert und dann von dem Füllmaterial ein Drehmoment auf die Innenseite des gefüllten und im Durchmesser aufgeweiteten Naturdarmes übertragen; der gefüllte und aufgeweitete (Natur-)Darm wird dann an der Stelle abgedreht, an der er mit Hilfe der nachgeschalteten Portioniereinrichtung mitden umlaufenden Abteilelementen abgeklemmt wird. Während der Befüllung des Darms, bei dem es sich vorzugsweise um einen Naturdarm handelt, weitet sich dieser auf, bis er etwa seinen Nenndurchmesser erreicht hat. Gleichzeitig wird der Naturdarm von dem Füllrohr abgezogen, was einerseits durch das aus dem Füllrohr axial und radial austretende Füllmaterial und andererseits durch die mit dem gefüllten Darm zusammenwirkende Portioniereinrichtung erreicht wird. Der Darm verjüngt sich trotz Aufbringen einer Zugkraft mittels der Portioniereinrichtung nicht, sondern wird - wie gesagt - aufgeweitet. Aufgrund der Ausgestaltung des Endbereichs des Füllrohrs mit Ausnehmungen ist darüber hinaus ein größerer Austrittsquerschnitt realisiert im Vergleich zu einem herkömmlichen Füllrohr mit einer zylindrischen Austrittsöffnung, so daß bei entsprechenden Druckverhältnissen ein größerer Volumenstrom austreten kann, wodurch der Füllvorgang beschleunigt werden kann. Die Größe der Ausnehmungen ist bei dem erfindungsgemäßen Verfahren so an den Volumenstrom des Füllmaterials und den den Nenndurchmesser des Naturdarms und damit der herzustellenden Würstchen angepaßt, daß sich eine konstante Transportgeschwindigkeit des gefüllten Darms ergibt. Es kann erreicht werden, daß Würstchen mit Naturdarm, die im unteren Durchmesserbereich ihrer Kalibergruppe liegen, etwas praller gefüllt werden als solche, die im oberen Durchmesserbereich ihrer Kalibergruppe liegen. Hervorzuheben ist, daß durch die u.a. radiale Ausströmung des Füllmaterials ein Drehmoment von dem Wurstbrät auf den Darm übertragen wird. Darüberhinaus wird bei dem erfindungsgemäßen Verfahren weitgehend sichergestellt, daß Würstchen gleicher Längen hergestellt werden, auch wenn der Darm Kaliberschwankungen unterliegt. Durch die Füllmaschine und die nachgeschaltete Portioniereinrichtung mit beabstandeten Abteilelementen kann sichergestellt werden, daß stets im wesentlichen ein gleiches Volumen in einen portionierbaren, das Würstchen bildenden Abschnitt des Darms eingefüllt wird. Die Würstchen sind bei Kaliberschwankungen, das heißt Durchmesserschwankungen dann gegebenenfalls nur etwas mehr oder weniger prall gefüllt, während die Länge weitgehend konstant bleibt. Erfindungsgemäß können verschiedene Darmarten wie sogenannte auf Folie getubte Naturdärme oder überlappte Naturdärme verarbeitet werden.

Bei einer bevorzugten Ausführungsform des Verfahrens ist vorgesehen, daß das Füllmaterial durch mehrere in gleichen Abständen zueinander im Umfangsbereich des Füllrohrs ausgebildete Ausnehmungen radial in den Darm einströmt, da auf diese Weise eine gleichmäßige Einfüllung und gleichmäßige Aufbringung eines Drehmoments zunächst auf das durch die Ausnehmungen radial aus dem Füllrohr austretende Füllmaterial und anschließend mittels des Füllmaterials auch auf den Darm erreicht wird und der Austrittsquerschnitt durch mehrere Ausnehmungen vergrößert ist.

Bei einer ebenfalls bevorzugten Ausführungsform ist vorgesehen, daß der ungefüllte Darm von einem Andruckelement an die äußere Umfangsfäche des Füllrohrs angedrückt und dadurch ein Drehmoment zur Rotation des Darms aufgebracht wird. Durch diese Maßnahme wird zusätzlich ein Drehmoment auf den Darm aufgebracht und gleichzeitig eine Rückströmung des Füllmaterials entgegen der Strömungsrichtung des Füllmaterials in dem Füllrohr verhindert. Ferner kann eine Prallheit der Würstchen mit Hilfe des Andruckelements erzielt werden.

Das erfindungsgemäße Verfahren wird in vorteilhafter Weise dadurch weitergebildet, daß eine Zugkraft auf den Darm von den Abteilelementen der Portioniereinrichtung und von dem aus dem Füllrohr in den Darm einströmenden Füllmaterial aufgebracht wird. Der Transport des gefüllten Darms erfolgt somit einerseits durch das auch teilweise axial aus dem Füllrohr ausströmende Füllmaterial, das dabei eine axial gerichtete Schubspannung auf den Darm erzeugt und zusätzlich durch die von den Abteilelementen der Portioniereinrichtung aufgebrachten Zugkraft, so daß insgesamt eine gleichmäßige, kontinuierliche Förderung erreicht wird.

Vorzugsweise werden die Abteilelemente der Portioniereinrichtung entlang einer umlaufenden Bewegungsbahn geführt und ist die Geschwindigkeit der Abteilelemente einstellbar, so daß durch eine Einstellung und Anpassung der Geschwindigkeit an den Volumenstrom bzw. Massenstrom des Füllmaterials innerhalb bestimmter Grenzen die Prallheit der Würstchen beeinflußt werden kann.

Gemäß einer Weiterbildung wird vorgeschlagen, daß die Drehzahl des Füllrohres stufenlos einstellbar ist und die von der Füllpumpe durch das Füllrohr geförderte Menge an Füllmaterial je Zeiteinheit einstellbar ist, so daß eine individuelle Einstellung vorgenommen werden kann.

Gemäß einer Weiterbildung der erfindungsgemäßen Vorrichtung ist vorgesehen, daß mehrere gleichmäßig um den Umfang des Füllrohrs beabstandete sich axial erstreckende Einbuchtungen im Endbereich des Füllrohres vorgesehen sind. Alternativ könnten anstelle der Einbuchtungen auch - von dem Ende des Füllrohres getrennte - Bohrungen, Schlitze oder dergleichen in dem Füllrohr ausgebildet sein. Durch die gleichmäßige Beabstandung der Einbuchtungen - oder Bohrungen oder Schlitze - läßt sich eine gleichmäßige Durchmesseraufweitung des Darms realisieren.

Vorzugsweise ist das Füllrohr so gestaltet, daß die Einbuchtungen einen sich mit zunehmenden Abstand vom Ende des Füllrohres verjüngenden Mündungsabschnitt und einen sich daran anschließenden im wesentlichen kreisförmigen oder elliptischen Abschnitt aufweisen. Auf diese Weise läßt sich ein relativ großer Strömungsquerschnitt erzielen.

Die Erfindung löst die Aufgabe bei einer Vorrichtung der eingangs genannten Art, die ein das Füllrohr umschließendes Andruckelement zum Andrücken des ungefüllten Darms an die äußere Umfangsfläche des Füllrohres aufweist, ferner dadurch, daß das Andruckelement mindestens einen Schlitz aufweist, der sich von einer zentralen Aussparung zur Aufnahme des Füllrohrs im wesentlichen radial auswärts erstreckt.

Die Vorteile eines einen Einführ-Schlitz aufweisenden Andruckelements liegen insbesondere darin, daß das Andruckelement nicht mehr nur durch eine axiale Bewegung auf das Füllrohr aufschiebbar oder abnehmbar ist, sondern erfindungsgemäß radial auf das Füllrohr aufsetzbar bzw. von dem Füllrohr abnehmbar ist, wobei dann das Füllrohr durch den Schlitz hindurchgeführt wird und in der zentralen Aussparung plaziert bzw. aus dieser herausgeführt wird. Beim Aufsetzen des Andruckelementes "schnappt" es gewissermaßen über das Füllrohr. Dies führt auch dazu, daß ein Darmanfang eines gerafften Darms nicht mehr aufwendig durch ein Andrückelement hindurchgefädelt werden muß, sondern statt dessen das Abdrehelement nach dem Auffädeln des gerafften Darms einfach über den Darm radial geschoben wird. Ein aus dem Stand der Technik bekanntes Abschenken oder Verschieben einer Bremseinrichtung entfällt erfindungsgemäß.

Insbesondere bei einer erfindungsgemäßen Vorrichtung mit einer Hubeinrichtung zum wahlweisen Anheben und Absenken des Andruckelements zwischen einer Betriebsstellung und einer Ruhestellung, wobei das Füllrohr während des Anhebens und Absenkens des Andruckelements durch den Schlitz des Andruckelements bewegt wird, kommen die zuvor beschriebenen Vorteile eines geteilten oder geschlitzten Andruckelements besonders zum Tragen, da dann automatisch mit Hilfe der Hubeinrichtung das Andruckelement in die Betriebs- bzw. Ruhestellung verfahrbar ist, ohne daß ein axiales Aufschieben mehr erforderlich wäre.

Das erfindungsgemäße Andruckelement wird dadurch weitergebildet, daß es aus einem elastischen Material besteht, einen im wesentlichen ringförmigen Lippenabschnitt, der den Darm an das Füllrohr andrückt, und einen den Schlitz enthaltenden Schlitzabschnitt aufweist, wobei die Breite des Schlitzes geringer ist als der Außendurchmesser des Füllrohres.

Vorzugsweise ist das Andruckelement an einer Halte- und Führungseinrichtung lösbar befestigt, so daß es sicher positioniert und geführt ist. Besonders bevorzugt ist es dabei, daß die Halte- und Führungseinrichtung einen Rahmen und ein an diesem angeordnetes, das Andruckelement aufnehmendes Halteelement aufweist und das Halteelment mit Spiel bewegbar an dem Rahmen angeordnet ist. Aufgrund der bewegbaren Anordnung mit Spiel oder Toleranz positioniert sich das Andruckelement im Betrieb gewissermaßen automatisch relativ zu dem Füllrohr, so daß eine aufwendige Einstellung und Fixierung des Andruckelements nicht mehr erforderlich ist. Zweckmäßigerweise ist das Halteelement in einer senkrecht zur Längsachse des Füllrohrs angeordneten Ebene bewegbar, während es gleichzeitig in einer definierten axialen Position - relativ zum Füllrohr - angeordnet ist. Das Halteelement kann einfach in die Halte- und Führungseinrichtung eingesetzt, vorzugsweise eingeschoben werden. Hierzu weist das Halteelement eine im wesentlichen rechteckige äußere Kontur und einen von innen nach außen führenden Einführschlitz zum Einbringen des Andruckelements auf.

Eine besonders einfache axiale Positionierbarkeit ergibt sich dadurch, daß der Rahmen der Halte- und Führungseinrichtung in Richtung der Längsachse des Füllrohres verschiebbar und in mehreren Stellungen feststellbar ist. Konstruktiv besonders einfach realisiert ist die Verschiebbarkeit und Feststellbarkeit dadurch, daß der Rahmen axial verschieblich gelagert ist und ein Innengewinde aufweist, welches mit einer rotierbaren Gewindespindel in Eingriff ist und durch Drehung der Gewindespindel bewegbar ist. Durch die Steigung der Gewindespindel entsteht eine Art Selbsthemmung. Die Halte- und Führungseinrichtung ist vorzugsweise an einem anhebbaren bzw. absenkbaren Hubtisch angeordnet.

Die Erfindung löst die Aufgabe der eingangs genannten Art ferner bei einer eingangs beschriebenen Vorrichtung durch eine Hubeinrichtung zum wahlweisen Anheben und Absenken der Portioniereinrichtung zwischen einer Betriebsstellung und einer Ruhestellung. Durch eine Anhebbarkeit und Absenkbarkeit der Portioniereinrichtung läßt sich die Handhabung der Vorrichtung erheblich vereinfachen. In der Ruhestellung, in der die Portioniereinrichtung gegenüber der Längsachse des Füllrohres abgesenkt ist, kann ein Darm auf besonders einfache Weise auf das Füllrohr aufgeschoben werden, ohne daß die Portioniereinrichtung hierbei stören würde. Gleiches gilt für das Andruckelement, welches ebenfalls bei einer bevorzugten Ausführungsform absenk- und anhebbar ist. Darüber hinaus ist eine einfache Reinigung des Füllrohres möglich. Nach dem Auffädeln eines Darms wird die Portioniereinrichtung in die Betriebsstellung verfahren, so daß sie relativ zur Längsachse des Füllrohres ausgerichtet ist. Vorzugsweise liegt die Längsachse des Füllrohres im Bereich zwischen zwei umlaufenden Bandelementen, die die Abteilelemente der Portioniereinrichtung tragen, so daß der gefüllte Darm nach der Befüllung eine im wesentlichen gradlinige Bewegungsbahn durchläuft und somit auf kürzestem Weg der Portioniereinrichtung zugeführt wird.

Bei einer besonders bevorzugten Ausführungsform der erfindungsgemäßen Vorrichtung ist vorgesehen, daß die Portioniereinrichtung und das Andruckelement mittels einer einzigen gemeinsamen Hubeinrichtung zusammen anhebbar bzw. absenkbar sind. Auf diese Weise ist der konstruktive Aufwand erheblich reduziert. Das vorzugsweise an einer Halte- und Führungseinrichtung befestigte Andruckelement ist zusammen mit der Portioniereinrichtung vollständig in eine Ruhestellung bzw. die Betriebsstellung verfahrbar. Selbstverständlich kann die Hubeinrichtung auch so angeordnet sein, daß die Portioniereinrichtung gegebenenfalls das Andruckelement in einer im wesentlichen horizontalen oder einer schräg angeordneten Ebene verfahrbar sind. In diesem Fall würde der in dem Andruckelement ausgebildete Schlitz entsprechend der Neigung der Ebene verlaufen. Vorzugsweise realisiert die Hubeinrichtung eine gerade Bewegungsbahn.

Bei einer Weiterbildung der erfindungsgemäßen Vorrichtung wird vorgeschlagen, daß die Portioniereinrichtung zwei benachbart zu der Bewegungsbahn des gefüllten Darms angeordnete, gegenüberliegende umlaufende Förderelemente aufweist und die Abteilelemente an den Förderelementen befestigt sind. Vorzugsweise sind zwei gegenüberliegende Abteilelemente winklig versetzt zueinander angeordnet, so daß ein Ineinandergreifen der Abteilelemente zuverlässig dafür sorgt, daß der gefüllte Darm im Eingriffsbereich der Abteilelemente an einer Rotation gehindert und abgeklemmt wird, so daß eine Abdrehstelle an einem gewünschten Ort erzeugt wird.

Die Erfindung ist nachstehend anhand von Ausführungsbeispielen unter Bezugnahme auf die beigefügten Zeichnungen beschrieben. Es zeigen:
- Figur 1: eine erfindungsgemäße Vorrichtung zum Herstellen von längenportionierten Würstchen in einer Seitenansicht;
- Figur 2: die Vorrichtung aus Figur 1 in einer Draufsicht;
- Figur 3: einen in Figur 2 mit Y gekennzeichneten vergrößerten Abschnitt der erfindungsgemäßen Vorrichtung in einer Draufsicht;
- Figur 4: einen in Figur 1 mit X gekennzeichneten Abstand der erfindungsgemäßen Vorrichtung in einer Seitenansicht;
- Figur 5: eine Ansicht AA eines Andruckelements in einer Seitenansicht;
- Figur 6: ein alternatives Ausführungsbeispiel mit einer erfindungsgemäßen Halte- und Führungseinrichtung für ein einen Schlitz aufweisendes Andruckelement in einer Seitenansicht;
- Figur 7: die Halte- und Führungseinrichtung gemäß Figur 6 in einer Teilschnittdarstellung;
- Figur 8: eine Draufsicht auf die Halte- und Führungseinrichtung gemäß Figur. 6; und
- Figur 9: ein erfindungsgemäßes Füllrohr mit Einbuchtungen im Endbereich in einer Teilschnittdarstellung.

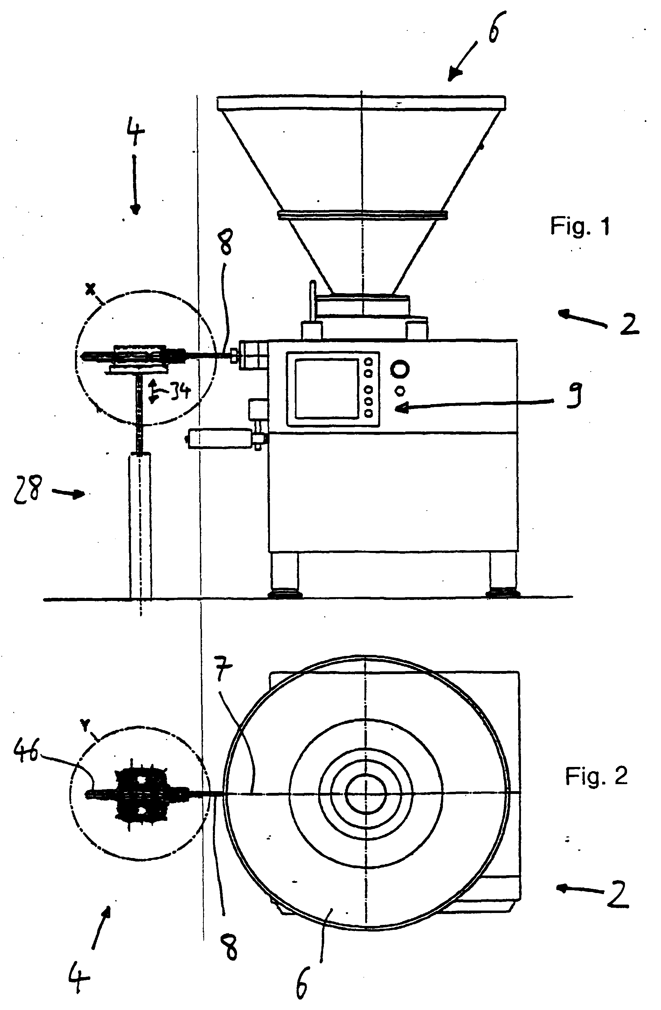

Die in Fig. 1 in einer Seitenansicht dargestellte Vorrichtung dient zum Herstellen von längenportionierten Würstchen und weist eine weitgehend herkömmliche Füllmaschine 2 und eine mit dieser gekoppelte Portioniereinrichtung 4 auf. Die Füllmaschine 2 weist einen Trichter 6 zur Speicherung von Wurstbrät, eine mit dem Trichter 6 gekoppelte Füllpumpe und ein kontinuierlich oder intermittierend um seine Längsachse 7 antreib- und rotierbares Füllrohr 8 auf, durch welches das Wurstbrät hindurchgefördert wird. Zur Steuerung der Füllmaschine 2, der Portioniereinrichtung 4 und einer nicht dargestellten, der Portioniereinrichtung 4 nachgeschalteten Aufhängevorrichtung ist ein Bedienfeld 9 vorgesehen, das mit einer Steuerungs- und Regelungseinrichtung verbunden ist. Die Drehzahl des Füllrohres ist ebenso stufenlos einstellbar wie die von der Füllpumpe durch das Füllrohr 8 geförderte Menge an Wurstbrät je Zeiteinheit.

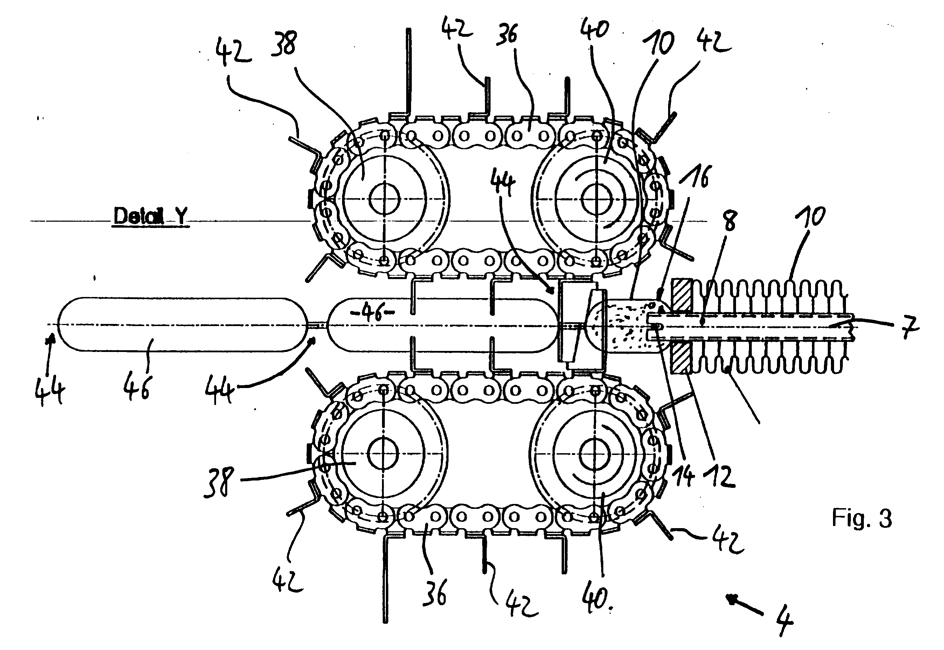

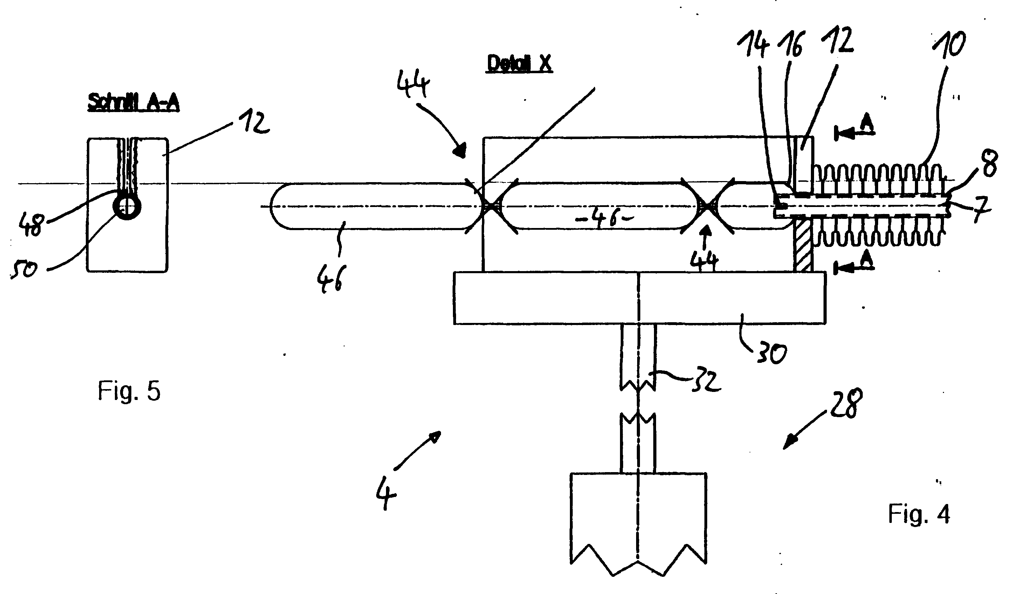

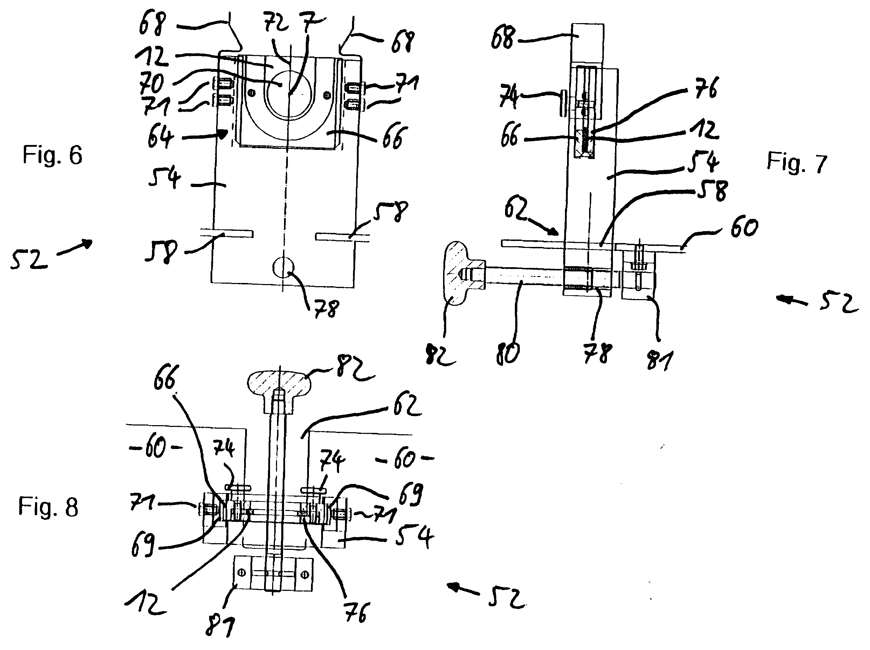

Wie in den Fig. 3 und 4 entnehmbar ist, ist das Füllrohr 8 abschnittsweise von einem gerafften oder geraubten Darm 10 umgeben, bei dem es sich um Naturdarm oder Kunstdarm handeln kann. Benachbart zu dem gerafften Abschnitt des Darms 10 ist ein in Fig. 3 schematisch und in den Fig. 6 bis 8 detailliert dargestelltes Andruckelement 12 "auf dem Füllrohr" 8 angeordnet, um den Darm 10 an die äußere Oberfläche des zylindrischen Füllrohres 8 anzupressen und im Betrieb für eine Übertragung eines Drehmoments von dem rotierenden Füllrohr 8 auf den Darm 10 zu sorgen.

Das Füllrohr 8 weist in seiner Wand im Endbereich mehrere Ausnehmungen 14 auf, durch die unter Druck stehendes Wurstbrät mit einer radialen Strömungskomponente austreten und in den Darm 10 radial einströmen kann. Dadurch kommt es in dem Bereich 16, vgl. insbesondere Fig. 3, d.h. in dem Abschnitt zwischen dem Andruckelement 12 und dem distalen Ende des Füllrohrs 8, zu einer Erweiterung des Durchmessers des Darms 10 durch hineinströmendes Wurstbrät. Es sind mehrere, gleichmäßig an dem Umfang des Füllrohres 8 angeordnete Ausnehmungen 14 in Form von schlitzartigen Einbuchtungen vorgesehen, die eine im wesentlichen konstante Breite aufweisen. Es könnten jedoch auch anders gestaltete Schlitze, Durchgangsbohrungen oder dergleichen vorgesehen sein, um eine radiale Ausströmung von Wurstbrät zu ermöglichen.

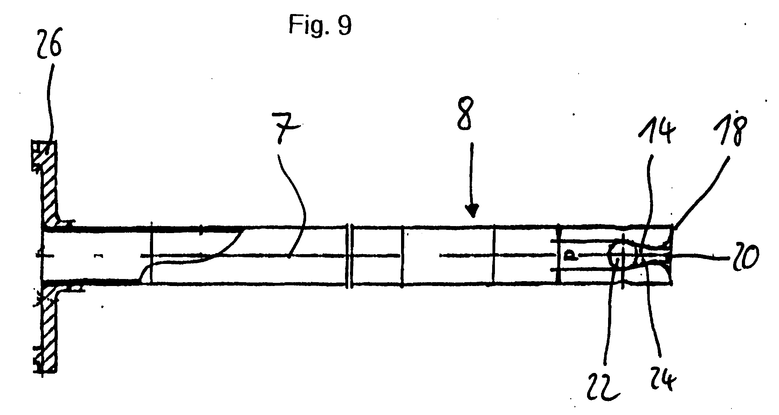

Fig. 9 veranschaulicht ein alternatives Ausführungsbeispiel eines Füllrohrs. Dort sind vier um den Umfang verteilte Ausnehmungen 14 in Form von Einbuchtungen vorgesehen, die jeweils einen sich mit zunehmendem Abstand vom Ende 18 des Füllrohres 8 verjüngenden Mündungsabschnitt 20 und einen sich daran anschließenden im wesentlichen kreisförmigen Abschnitt 22 aufweisen, der auch elliptisch oder dergleichen sein könnte. Zwischen dem Mündungsabschnitt 20 und dem Abschnitt 22 ist ein Übergangsbereich 24 mit sich in Richtung auf den kreisförmigen Abschnitt 22 erweiterndem Querschnitt angeordnet. An dem dem Ende 18 gegenüberliegenden Endbereich ist ein Anschlußflansch 26 an den zylindrischen Rohrabschnitt angeschweißt, mit dem das Füllrohr 8 an einem nicht dargestellten Drehantrieb der Füllmaschine 2 (Fig. 1) lösbar befestigt ist.

Die Portioniereinrichtung 4 ist ebenso wie das Andruckelement 12 mittels einer schematisch in Fig. 4 dargestellten Hubeinrichtung 28 auf und ab verfahrbar aus einer dargestellten Betriebsstellung in eine Ruhestellung, in der die Portioniereinrichtung 4 und das Andruckelement 12 vertikal deutlich beabstandet von der Längsachse 7 des Füllrohres 8 angeordnet ist, so daß letzteres frei zugänglich ist. Die Hubeinrichtung 28 weist einen Hubtisch 30 oder einen Rahmen 60, vgl. Fig. 7, auf, der mit einer oder mehreren translatorisch hin- und herbewegbaren Stangen 32 gekoppelt ist. Die Stangen 32 sind beispielsweise pneumatisch oder hydraulisch verfahrbar und mit einem in einem Zylinder bewegbaren Kolben gekoppelt, wobei der Zylinderraum mit Gas oder Hydraulikflüssigkeit befüllbar ist. Alternativ könnten die Stangen 32 als Gewindespindeln ausgebildet sein, die mit elektromotorisch angetriebenen Gewindehülsen in Eingriff stehen und somit translatorisch auf und ab verfahrbar sind. Wie durch den Pfeil 34 in Fig. 1 angedeutet ist, ist die komplette Portioniereinrichtung 4 und das Andruckelement 12 vertikal verfahrbar. Es ist jedoch auch denkbar, daß mittels einer horizontal oder schräg angeordneten Hubeinrichtung die Portioniereinrichtung 4 horizontal oder entlang einer schräg angeordneten Ebene aus einer Betriebsstellung in eine Ruhestellung verfahrbar ist.

Wie aus Fig. 3 ersichtlich ist, weist die Portioniereinrichtung 4 zwei benachbarte zu der Bewegungsbahn des gefüllten Darms 10 angeordnete, gegenüberliegende und umlaufende Förderelemente in Form von Endlos-Ketten 36 auf, die jeweils um zwei Ritzel 38, 40 gelegt sind. Die Ritzel 40 sind mit einem oder jeweils einem elektrischen Antriebsmotor gekoppelt, um die Ketten 36 sychron in Bewegung zu setzen. An den Ketten 36 sind Abteilelemente 42 in gleichen Abständen zueinander befestigt, die sich jeweils paarweise gegenüberliegen und eine Klemmkraft auf den gefüllten Darm 10 aufbringen. Die Abteilelemente 42 sind vorzugsweise schräg zueinander angeordnet und weisen eine V-förmige Einbuchtung auf, die den gefüllten Darm aufnimmt und einklemmt. Sie sind winklig zueinander und versetzt angeordnet. Durch die Abteilelemente 42 wird eine Klemmkraft auf den gefüllten Darm 10 aufgebracht, so daß dieser lokal an einer Rotation gehindert wird, so daß eine Abdrehstelle 44 erzeugt wird. Durch Herstellung mehrerer beabstandeter Abdrehstellen 44 werden einzelne Würstchen 46 gleicher Länge hergestellt. Die Drehgeschwindigkeit der Ritzel 40 ist einstellbar, so daß die Geschwindigkeit der Abteilelemente 42 ebenfalls einstellbar und an die Geschwindigkeit des gefüllten Darms 10 anpassbar ist.

Wie Fig. 5 zeigt, weist das Andruckelement 12 einen Schlitz 48 auf, der sich von einer zentralen, zylindrischen Aussparung zur Aufnahme des Füllrohres 8 im wesentlichen radial auswärts erstreckt, so daß das Füllrohr 8 von außen durch den Schlitz 48 in die Aussparung 50 einführbar ist.

Während die Fig. 4 und 5 ein einfaches Andruckelement 12 darstellen, ist in den Fig. 6 bis 8 ein alternatives Ausführungsbeispiel eines Andruckelements 12 dargestellt, das in einer Halte- und führungseinrichtung 52 gehalten und positioniert ist. Die Halte- und Führungseinrichtung 52 umfaßt einen an einem Gehäuse 60 oder einem Hubtisch (siehe Bezugszeichen 30 in Fig. 4) einer Hubeinrichtung 28 gelagerten metallischen Rahmen 54, der im wesentlichen quaderförmig ausgebildet ist und im unteren Bereich zwei gegenüberliegende Schlitze 58 aufweist, in denen zur Lagerung des Rahmens 54 Abschnitte 22 des Gehäuses 60 der Hubeinrichtung ,vgl. Fig. 7 und Fig. 8, angeordnet sind. Das Gehäuse 60 weist einen breiten Schlitz 62 auf, in dem der zwischen den Schlitzen 58 liegende Abschnitt 22 des Rahmens 54 axial bewegbar ist.

In einer im oberen Bereich des Rahmens 54 angeordneten, rechteckigen Ausnehmung 64 ist ein im wesentlichen quadratisches Halteelement 66 eingeschoben und im eingeschobenen Zustand mit Hilfe von elastischen, eine Nase aufweisenden Blechstreifen 68 fixiert, die mit ihrer Nase das Halteelement 66 hintergreifen, aber einfach manuell zurückgebogen werden können, um das Halteelement 66 zu entnehmen. Die Blechstreifen 68 sind mit Hilfe von Schrauben 71 an dem Rahmen 54 befestigt. Zur seitlichen Führung des Halteelements 66 ist in dem Rahmen 54 zwei im wesentlichen U-förmige Nuten 69 ausgebildet, in die das Halteelement 66 mit seinen Seiten einschiebbar ist.

Ein aus einem elastischen Material bestehendes Andruckelement 12 ist eingespannt, welches eine zentrale zylindrische Aussparung 70 und einen Schlitz 72 aufweist, der von der Aussparung 70 nach außen führt und durch den das Füllrohr 8 in bzw. aus die Aussparung 70 führbar ist. Das Andruckelement 12 ist in Betrieb mit der äußeren Oberfläche des Darms 10 in Kontakt und sorgt für eine Anpressung des Darms 10 an die äußere Oberfläche des Füllrohrs 8. Dadurch wird ein Drehmoment von dem Füllrohr auf den Darm 10 übertragen. Der Schlitz 72 verläuft im Ausführungsbeispiel radial, er könnte jedoch auch andere Formen oder Verläufe annehmen.

Mittels einer mit Hilfe zweier Rändelschrauben 74 relativ zu dem Halteelement 66 verspannbaren Spannplatte 76 ist das Andruckelement 12 an dem Halteelement 66 lösbar befestigt. Hervorzuheben ist, daß erfindungsgemäß das Halteelement 66 mit einem Spiel oder einer Toleranz in dem Rahmen 54 plaziert ist, so daß das Andruckelement 12 sich "automatisch" relativ zu dem Füllrohr 8 positioniert, so daß eine aufwendige exakte Justierung und Fixierung des Andruckelements 12 und des Halteelements 66 vermieden werden kann.

Unterhalb des Gehäuses 60 ist eine Gewindebohrung 78 in dem Rahmen 54 ausgebildet, die mit einem an einer Gewindespindel 80 ausgebildeten Außengewinde in Eingriff steht. Die Gewindespindel 80 ist mit einem Endabschnitt an einem drehbar an einem mit dem Gehäuse 60 verschraubten Lager 81 gelagert, und am anderen Ende ist ein Drehknopf 82 befestigt, mit dem die Gewindespindel 80 manuell um die Längsachse 7 gedreht werden kann. Bei Drehung der Spindel 80 wird der Rahmen 54 in Richtung der Längsachse 7 der Gewindespindel 80 und in Richtung der Längsachse 7 des Füllrohres 8 translatorisch in Abhängigkeit von der Drehrichtung der Spindel 80 - in Fig. 7 nach links oder rechts - verschoben, so daß das Andruckelement 12 exakt in eine gewünschte Stellung auf dem Füllrohr 8 verfahrbar ist und aufgrund der Selbsthemmung der Gewindebohrung 78 bzw. der Gewindespindel 80 in einer gewünschten Stellung fixiert ist.

Die Betriebsweise der erfindungsgemäßen Vorrichtung und des Verfahrens ist nachstehend erläutert:

Vor der Herstellung der Würstchen 46 wird zunächst die Portioniereinrichtung 4 zusammen mit dem Andruckelement 12 in die Ruhestellung nach unten (Fig. 1 oder Fig. 4) verfahren, so daß das Füllrohr 8 frei zugänglich ist. Es wird dann ein Darm 10 in gerafftem Zustand auf das Füllrohr 8 axial aufgeschoben und teilweise mit seinem Endabschnitt abgezogen in den ungerafften Zustand über das distale Ende 18 des Füllrohres 8 hinaus. Anschließend wird die Portioniereinrichtung 4 und das Andruckelement 12 - gegebenenfalls mit der in den Fig. 6 bis 8 beschriebenen Halte- und Führungseinrichtung 52 - vertikal nach oben mit Hilfe der Hubeinrichtung 28 in die Betriebsstellung verfahren. Das Andruckelement 12 umschließt in dieser vollständig das Füllrohr 8 und preßt den Darm 10 an das Füllrohr 8 an.

Die Füllpumpe der Füllmaschine 2 kann nun eingeschaltet werden, so daß Wurstbrät durch das Füllrohr 8 strömt und durch eine axiale und radiale Strömung durch die Ausnehmungen 14 in den Innenraum des Darms 10 hineinströmt (vgl. Position 16 in Fig. 3) und der Darm 10 mit Wurstbrät gefüllt wird. Gleichzeitig mit der Füllpumpe wird die Portioniereinrichtung 4 eingeschaltet, so daß die Abteilelemente 42 zusammen mit der Kette 36 abschnittsweise synchron zu dem gefüllten Darm 10 bewegt werden und dabei lokal mit dem gefüllten Darm 10 in Eingriff kommen und diesen mit einer Klemmkraft beaufschlagen, so daß der gefüllt Darm 10 dort an einer Rotation gehindert wird, so daß aufgrund der Rotation des übrigen gefüllten Darms 10 zwischen den Abteilelementen 42 und dem Endbereich des Füllrohrs 8 rotierenden gefüllten Darms 10 abgedreht werden. Der gefüllt Darm 10 wird dann mit Hilfe der Portioniereinrichtung weiter entlang einer im wesentlichen geradlinigen Bewegungsbahn - in Fig. 3 nach links - transportiert, bis weitere Abteilelement 42 erneut auf den gefüllten Darm 10 einwirken und eine weitere Abdrehstelle erzeugt wird. Dieser Vorgang wird mehrfach wiederholt, so daß eine Kette von zusammenhängenden Würstchen 46 gebildet wird, die manuell oder von einer herkömmlichen, nicht dargestellten Aufhängevorrichtung aufgehängt und abgenommen werden können.

Ist der Darm 10 vollständig gefüllt und kein oder nur noch ein geringer Abschnitt 22 von gerafftem Darm 10 auf dem Füllrohr 8 angeordnet, wird die Füllpumpe und die Portioniereinrichtung 4 ausgeschaltet und aus der Betriebsstellung in die Ruhestellung nach unten verfahren. Dann kann der zuvor beschriebene Vorgang wiederholt werden.

### Bezugszeichenliste

- 2: Füllmaschine
- 4: Portioniereinrichtung
- 6: Trichter
- 7: Längsachse
- 8: Füllrohr
- 9: Bedienfeld
- 10: Darm
- 12: Andruckelement
- 14: Ausnehmungen
- 16: Bereich
- 18: Ende
- 20: Mündungsabschnitt
- 22: Abschnitt
- 26: Anschlußflansch
- 28: Hubeinrichtung
- 30: Hubtisch
- 32: Stangen
- 34: Pfeil
- 36: Endlos-Ketten
- 38: Ritzel
- 40: Ritzel
- 42: Abteilelemente
- 44: Abdrehstelle
- 46: Würstchen
- 48: Schlitz
- 50: Aussparung
- 52: Halte- und Führungseinrichtung
- 54: Rahmen
- 58: Schlitz
- 60: Gehäuse
- 62: Schlitz
- 64: Ausnehmung
- 66: Halteelement
- 68: Blechstreifen
- 69: Nuten
- 70: Aussparung
- 71: Schrauben
- 72: Schlitz
- 74: Rändelschrauben
- 76: Spannplatte
- 78: Gewindebohrung
- 80: Gewindespindel
- 81: Lager
- 82: Drehknopf

## Patentansprüche

1. Verfahren zur Herstellung von kettenähnlichen Lebensmittelprodukten wie Würstchen (46) oder dergleichen,
bei dem ein pastöses Füllmaterial wie etwa Wurstbrät mittels einer Füllpumpe durch ein um seine Längsachse (7) rotierbares Füllrohr (8) hindurchgefördert und in eine schlauchartige, teilweise das Füllrohr (8) umgebenden Darm (10) oder eine Hülle eingefüllt wird,
bei dem der gefüllte Darm (10) einer Portioniereinrichtung (4) mit mehreren paarweise gegenüberliegenden und synchron zusammen mit dem gefüllten Darm (10) bewegbaren Abteilelementen (42) zugeführt wird und der gefüllte Darm (10) von zwei paarweise gegenüberliegenden Abteilelementen (42) erfaßt und mit einer Klemmkraft beaufschlagt wird, und
bei dem durch Rotation des Füllrohres (8) ein Drehmoment von dem Füllrohr (8) auf den Darm (10) aufgebracht wird, so daß der gefüllte Darm (10) wenigstens in einem Abschnitt (22) zwischen einer Austrittsöffnung des Füllrohres (8) und der Portioniereinrichtung (4) in Rotation versetzt wird und durch Aufbringung der Klemmkraft durch die Abteilungselemente (42) lokal an einer Rotation gehindert wird, so daß eine Abdrehstelle (44) erzeugt wird,
und bei dem an einem von einer erzeugten Abdrehstelle (44) beabstandeten Ort an dem gefüllten Darm eine weitere Abdrehstelle (44) erzeugt wird, so daß portionierte Würstchen (46) oder dergleichen erzeugt werden,
**dadurch gekennzeichnet**, daß das Füllmaterial wenigstens teilweise durch im Endbereich des Füllrohrs (8) in dessen Umfangswand ausgebildete Ausnehmungen (14) radial in den Darm (10) einströmt und der Durchmesser des Darms (10) im Endbereich des Füllrohres (8) aufgrund der wenigstens teilweise radialen Einströmung vergrößert wird.

2. Verfahren nach Anspruch 1,
**dadurch gekennzeichnet**, daß das Füllmaterial durch mehrere in gleichen Abständen zueinander im Umfangsbereich des Füllrohrs (8) ausgebildete Ausnehmungen (14) radial in den Darm einströmt.

3. Verfahren nach Anspruch 1 oder 2,
**dadurch gekennzeichnet**, daß der ungefüllte Darm (10) von einem Andruckelement (12) an die äußere Umfangsfäche des Füllrohrs (8) angedrückt und dadurch ein Drehmoment zur Rotation des Darms (10) aufgebracht wird.

4. Verfahren nach einem der vorstehenden Ansprüche,
**dadurch gekennzeichnet**, daß eine Zugkraft auf den Darm (10) von den Abteilelementen (42) der Portioniereinrichtung (4) und von dem aus dem Füllrohr (8) in den Darm (10) einströmenden Füllmaterial aufgebracht wird.

5. Verfahren nach einem der vorstehenden Ansprüche,
**dadurch gekennzeichnet**, daß die Abteilelemente (42) der Portioniereinrichtung (4) entlang einer umlaufenden Bewegungsbahn geführt werden und die Geschwindigkeit der Abteilelemente (42) einstellbar ist.

6. Verfahren nach einem der vorstehenden Ansprüche,
**dadurch gekennzeichnet**, daß die Drehzahl des Füllrohres (8) stufenlos einstellbar ist und die von der Füllpumpe durch das Füllrohr (8) geförderte Menge an Füllmaterial je Zeiteinheit einstellbar ist.

7. Vorrichtung zur Herstellung von kettenähnlichen Lebensmittelprodukten wie Würstchen oder dergleichen, insbesondere zur Durchführung eines Verfahrens gemäß einem der vorstehenden Ansprüche,
mit einer Füllpumpe zum Fördern eines pastösen Füllmaterials wie Wurstbrät, einem mit der Füllpumpe kommunizierenden, um seine Längsachse (7) rotierbaren Füllrohr (8), welches an einem Endbereich eine Austrittsöffnung zum Abgeben des Füllmaterials in einen teilweise das Füllrohr (8) umgebenden Darm (10) oder eine Hülle aufweist und welches mit dem Darm (10) derart in Eingriff steht, daß durch Rotation des Füllrohres (8) ein Drehmoment von dem Füllrohr (8) auf den Darm (10) aufgebracht wird, so daß der gefüllte Darm (10) wenigstens in einem Abschnitt (22) zwischen einer Austrittsöffnung des Füllrohres und der Portioniereinrichtung in Rotation versetzt wird,
und mit einer Portioniereinrichtung (4) mit mehreren paarweise gegenüberliegenden und synchron bewegbaren Abteilelementen (42), die auf den gefüllten Darm (10) eine Klemmkraft aufbringen, so daß eine definierte Abdrehstelle erzeugt werden kann,
**dadurch gekennzeichnet**, daß das Füllrohr (8) in seinem Endbereich in der Umfangswand mindestens eine Ausnehmung (14) aufweist, durch die Füllmaterial radial in den Darm (10) einströmt und eine Vergrößerung des Durchmessers des Darms (10) im Endbereich des Füllrohrs (8) verursacht.

8. Vorrichtung nach Anspruch 7,
**dadurch gekennzeichnet**, daß mehrere gleichmäßig um den Umfang des Füllrohrs (8) beabstandete sich axial erstreckende Einbuchtungen im Endbereich des Füllrohres (8) vorgesehen sind.

9. Vorrichtung nach Anspruch 8,
**dadurch gekennzeichnet**, daß die Einbuchtungen einen sich mit zunehmenden. Abstand vom Ende (18) des Füllrohres (8) verjüngenden Mündungsabschnitt (20) und einen sich daran anschließenden im wesentlichen kreisförmigen oder elliptischen Abschnitt (22) aufweisen.

10. Vorrichtung nach dem Oberbegriff des Anspruchs 7 oder einem der Ansprüche 7 bis 9,
mit einem das Füllrohr (8) umschließenden Andruckelement (12) zum Andrücken des ungefüllten Darms (10) an die äußere Umfangsfäche des Füllrohrs (8),
**dadurch gekennzeichnet**, daß das Andruckelement (12) mindestens einen Schlitz aufweist, der sich von einer zentralen Aussparung zur Aufnahme des Füllrohrs (8) im wesentlichen radial auswärts erstreckt.

11. Vorrichtung nach Anspruch 10,
**dadurch gekennzeichnet**, daß das Andruckelement (12) aus einem elastischen Material besteht, einen im wesentlichen ringförmigen Lippenabschnitt, der den Darm (10) an das Füllrohr (8) andrückt, und einen den Schlitz enthaltenden Schlitzabschnitt aufweist, wobei die Breite des Schlitzes geringer ist als der Außendurchmesser des Füllrohres (8).

12. Vorrichtung nach Anspruch 10 oder 11,
**dadurch gekennzeichnet**, daß das Andruckelement (12) an einer Halte- und Führungseinrichtung (52) lösbar befestigt ist.

13. Vorrichtung nach Anspruch 12,
**dadurch gekennzeichnet**, daß die Halte- und Führungseinrichtung (52) einen Rahmen (54) und ein an diesem angeordneten, das Andruckelement (12) aufnehmenden Halteelement (66) aufweist und das Halteelment (66) mit einem Spiel bewegbar an dem Rahmen (54) angeordnet ist.

14. Vorrichtung nach Anspruch 13,
**dadurch gekennzeichnet**, daß das Halteelement (66) in einer senkrecht zur Längsachse (7) des Füllrohrs (8) angeordneten Ebene bewegbar ist.

15. Vorrichtung nach Anspruch 13 oder 14,
**dadurch gekennzeichnet**, daß das Halteelement (66) eine im wesentlichen rechteckige äußere Kontur und einen von innen nach außen führenden Einführschlitz zum Eindringen des Andruckelements (12) aufweist.

16. Vorrichtung nach einem der Ansprüche 13 bis 15,
**dadurch gekennzeichnet**, daß der Rahmen (54) der Halte- und Führungseinrichtung (52) in Richtung der Längsachse (7) des Füllrohres (8) verschiebbar und in mehreren Stellungen feststellbar ist.

17. Vorrichtung nach Anspruch 16,
**dadurch gekennzeichnet**, daß der Rahmen (54) axial verschieblich gelagert ist und ein Innengewinde aufweist, welches mit einer rotierbaren Gewindespindel (80) in Eingriff ist und durch Drehung der Gewindespindel (80) bewegbar ist.

18. Vorrichtung nach dem Oberbegriff des Anspruchs 7 oder einem der vorstehenden Ansprüche 7 bis 17,
**gekennzeichnet durch** eine Hubeinrichtung (28) zum wahlweisen Anheben und Absenken des Andruckelements (12) zwischen einer Betriebsstellung und einer Ruhestellung, wobei das Füllrohr (8) während des Anhebens und Absenkens des Andruckelements (12) durch den Schlitz des Andruckelements (12) bewegt wird.

19. Vorrichtung nach Anspruch 18,
**dadurch gekennzeichnet**, daß die Halte- und Führungseinrichtung (52) an einem anheb- bzw. absenkbaren Hubtisch (30) angeordnet ist.

20. Vorrichtung nach dem Oberbegriff des Anspruchs 7 oder einem der vorstehenden Ansprüche 7 bis 19,
**gekennzeichnet durch** eine Hubeinrichtung (28) zum wahlweisen Anheben und Absenken der Portioniereinrichtung (4) zwischen einer Betriebsstellung und einer Ruhestellung.

21. Vorrichtung nach Anspruch 18 und/oder 20,
**dadurch gekennzeichnet**, daß die Portioniereinrichtung (4) und das Andruckelement (12) mittels einer einzigen gemeinsamen Hubeinrichtung (28) zusammen anhebbar bzw. absenkbar sind.

22. Vorrichtung nach einem der vorstehenden Ansprüche,
**dadurch gekennzeichnet**, daß die Portioniereinrichtung (4) zwei benachbart zu der Bewegungsbahn des gefüllten Darms (10) angeordnete, gegenüberliegende umlaufende Förderelemente aufweist und die Abteilelemente (42) an den Förderelementen befestigt sind.

23. Vorrichtung nach mindestens einem der vorstehenden Ansprüche,
**dadurch gekennzeichnet**, daß zwei gegenüberliegende Abteilelemente (42) winklig versetzt zueinander angeordnet sind.
